# EUROPEAN PATENT SPECIFICATION

(11) **EP 1 368 981 B1**
(45) Date of publication and mention of the grant of the patent: **20.10.2010**
(21) Application number: 02701840.7
(22) Date of filing: 27.02.2002
(51) Int. Cl.: H04M 15/00

(54) **DIFFERENTIATED DEBITING IN A GPRS TELECOMMUNICATION AND DATA COMMUNICATION SYSTEM**
DIFFERENZIERTE GEBÜHRENBERECHNUNG IN EINEM GPRS TELEKOMMUNIKATIONS- UND DATENKOMMUNIKATIONSSYSTEM
OPERATIONS DE DEBIT DIFFERENT DANS UN SYSTEME DE TELECOMMUNICATION ET DE COMMUNICATION DE DONNEES GPRS

(30) Priority: 01.03.2001 SE 0100696
(43) Date of publication of application: 10.12.2003
(73) Proprietor: TELIASONERA AB, 106 63 Stockholm (SE)
(72) Inventor: ERIKSSON, Jonas, S-652 22 Karlstad (SE)
(74) Representative: Karlsson, Leif Karl Gunnar
(86) International application number: PCT/SE2002/000347
(87) International publication number: WO 2002/071788

(56) References cited:
- WO-A1-00/16579
- WO-A1-00/78080
- WO-A1-99/16266
- WO-A2-00/72571

## Description

### Field of the Invention

The present invention relates to a telecommunication and data communication system including a debiting device and a procedure for debiting, and particularly such a system according to Claim 1 and such a procedure according to claim 9.

### Background of the invention

In connection with the introduction of communication systems based on GPRS (GPRS, General Packet Radio Service) new debiting mechanisms have been introduced, which make it possible to debit the user per amount of data instead of the time the user is connected to the communication system. The basic principle in these systems is that all data, irrespective of what they represent or from which server it is derived, will have the same price to transmit from the communication network to a mobile user and vice versa. With the systems of today it is further possible to vary the cost depending on, for instance, when at day and night data are transmitted.

In the international patent application WO 00/72571 a procedure and a system for IP-based telephony where the charge for a call is debited the called party, so called "called party billing", is shown. In the system, the called party must on each occasion confirm that he/she is willing to pay for the call in question. In the abstract to the Japanese application JP,A,2000- 151811 a system for IP-telephony is shown which makes possible for an Internet-user to establish a connection by making so called "collect calls" and in that way free of charge get access to the home page of an advertiser.

The international patent application WO-00/16579 relates to mechanisms for supporting charging of users with localized service areas in a mobile telecommunications network which comprises a packet radio network. The solution is based on the idea that the packet radio network is adapted to classify the charging-related detail items of the CDR into multiple classes depending on whether or not the corresponding event occurred while the mobile station was in an LSA cell. This means that the mobility support element may actually classify the detail items into two classes, depending on whether or not the corresponding event occurred while the mobile station was in an LSA cell. Classifying the detail items into two classes is sufficient, if the LSA cells are similar as far as charging is concerned. If there are more than two types of charging, for instance more than two different tariffs, then the detail items should be classified into a corresponding number of classes.

A disadvantage of these systems is that the debited cost cannot be varied depending on the information content in the amount of data, or depending on from whom/where, for instance from which service server, the information is originating, or to whom/where the information shall be transmitted.

### The aim of the invention

The aim of the invention is to provide a telecommunication and data communication system and corresponding procedure which overcomes said disadvantages, that is, to provide a system/procedure which makes differentiated debiting costs possible, or, in other words, to provide a system procedure which not only debits a user or a service provider on basis of time connected, or transmitted amount of data, but a system/procedure which also can provide debiting variations based on the information content of transmitted amount of data.

### Summary of the invention

The present invention relates to a telecommunication and data communication system including a debiting mechanism and a procedure for debiting, and particularly such a system/procedure which is characterized in that the debiting device makes differentiated debiting costs possible.

The system/procedure according to the invention includes a base station BS, a service network node SGSN (SGSN, Serving GPRS Support Node) at which said base station BS is arranged. Further, one by an operator provided internal network is connected via said service network node SGSN. The internal network is connected with an external network by means of a network interconnection node GGSN (GGSN. Gateway GPRS Support Node). At said external network, further a service server provided by a service provides and providing information content to a user by means of a mobile station is arranged. The system/procedure according to the invention further includes a debiting device which makes debiting variations possible which are depending on the information content in the amount of data which are transmitted, and on from/to which service provider identified by its IP-address the amount of data is derived/ transmitted. Further, said debiting device debits a user based on the service provider's specifications.

In the system/procedure according to the invention, the service network nodes SGSN (SGSN, Service GPRS Support Node) and the network interconnection nodes GGSN (GGSN, Gateway GPRS Support Node), generate so called Call Detail Records (CDR), which include information about users, service provider and service server and particularly information about the amount of data which is transmitted in up respective downlink, and under which conditions this is made. Further, the Call Detail Records (CDR) separately account for data amounts which have been transmitted to, respective from, the service servers of different service providers, at which a division of costs is made.

In one embodiment of the invention, said division of costs is performed by an after-treatment device, at which some costs associated to the user's Call Detail Record (CDR) are debited the user, and other costs are debited the service provider. In another embodiment, said division of costs is made by the service network nodes SGSN and the network interconnection nodes GGSN, at which the service provider is allocated an identity for which there is created a Call Detail Record CDR, which is arranged to include information about services which shall be debited the service provider, at which the user and the service provider are debited on basis of the information that exists in their Call Detail Records (CDR).

### Brief description of the drawing

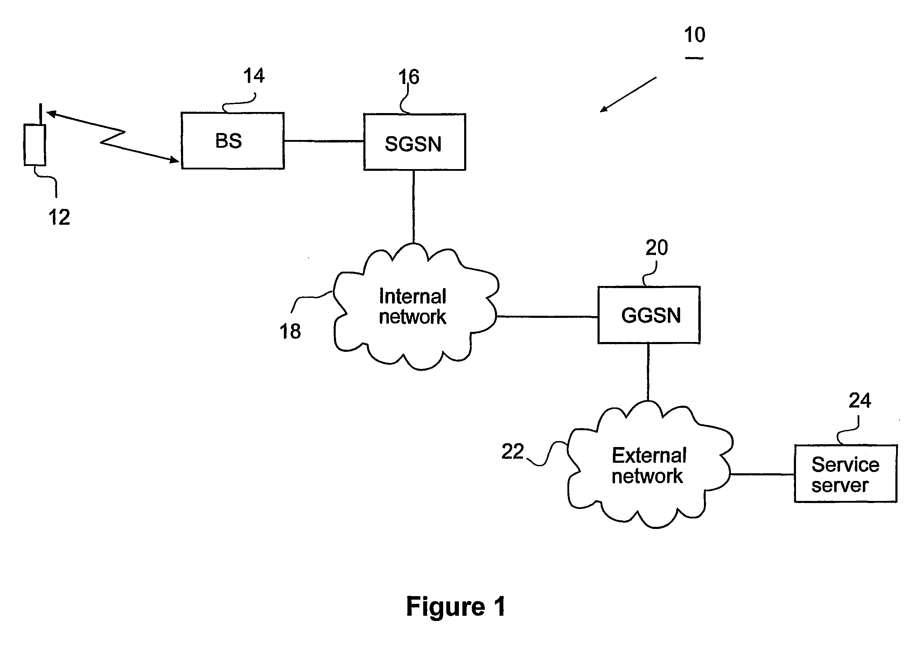

The invention now will be described in detail with reference to enclosed drawing, in which
- Figure 1: schematically shows an embodiment of the system according to the invention.

### Detailed description of the invention

The present invention relates to a wireless telecommunication and data communication system and to a corresponding procedure including a debiting device which provides differentiated debiting costs. The system/procedure according to the invention makes possible for instance, debiting variations depending on the information content in transmitted amount of data, and depending on from or to which server the information is derived respective transmitted. Further, the system/procedure makes possible for a user to, free of charge, or with a debiting degree the user and a service provider have agreed upon, transmit information between the service provider's service server and the user in said system. Preferably said system is a packet switching mobile communication system.

One embodiment of the telecommunication and data communication system according to the invention now will be described with reference to Figure 1. The system 10 according to the invention preferably is a packet switching GPRS GSM communication system or a UMTS system (UMTS, Universal Mobile Telecommunications System) which provides wireless packet switching communication with mobile stations 12, such as mobile telephones including protocols for wireless communication, for instance WAP (WAP, Wireless Application Protocol) and portable computers, for instance lap tops and palm tops, which can communicate wirelessly with base stations BS 14 (BS, Base Station) included in the system 10. Base stations BS 14 constitute a wireless communication interface between the mobile stations 12 and the communication system 10. Further, the base stations BS14 are connected to an operator's internal network 18 via so called service network nodes SGSN 16 (SGSN, Service GPRS Support Modes). To the internal network 18, further so called network interconnection nodes GGSN 20 (GGSN, Gateway GPRS Support Nodes), are arranged, which connect the internal network with the external network 22. An example of an external network 22 is Internet, but a second operator's internal network 18 can of course also be connected by means of network interconnection nodes GGSN 20 to a first operator's internal network. Preferably are at the external network 22 a number of service servers 24 arranged, which are provided by service providers. The service servers 24 provide information to user via his/her mobile station 12. The information can be presented to the user by the user by means of his/her mobile station 12 indicating/stating the address which makes the service server 24 accessible via the external network 22. When the external network 22 is Internet, the user indicates/states an address according to HTTP (HTTP, HyperText Transport Protocol) which is the protocol that is used to connect servers to a web-server. Further, each service server 24 is identified in a TCP/IP network (TCP/IP, Transmission Control Protocol/Internet Protocol) by means of its IPaddress.

In the system 10 according to the invention both the service network nodes SGSN 16 and the network interconnection nodes GGSN 20 generate so called Call Detail Records (CDR), not shown in Figure 1. The Call Detail Records (CDR) contain information about users, service providers and service servers 24 and particularly information about the amount of data which has been transmitted in up respective downlink, and under which conditions this is done.

In one embodiment of the system according to the invention, traffic to/from certain in advance defined service servers 24 is caused to be free of charge for the user, whereas the service provider is caused to pay for this traffic. This is done by in the Call Detail Records (CDR) separately accounting for data amounts which have been transmitted to/from these service servers 24 separated from the amount of data which has been transmitted to/from other service servers 24. For this purpose it is sufficient to identify these service servers 24 by means of their IPaddress. This separate accounting makes a cost division possible. This is done by means of an after-treatment device (not shown in Figure 1) which divides the costs associated to a user so that some services are paid by the service provider who via his/her service server 24 has provided the service, and other, or parts of other, costs are paid by the user. In the after-treatment device, the prices of the traffic to/from a user consequently is fixed by an in advance decided price-fixing.

In another embodiment of the system according to the invention, the cost division between the service user and the service provider is managed by the system which creates the Call Detail Records (CDR), that is, the service network nodes SGSN 16 and the network interconnection nodes GGSN 20. This can be done by the service provider being allocated an identity for which there is created a Call Detail Record (CDR) which includes information about all traffic to respective from the service provider's service server 24. At services free of charge for the user, the user's Call Detail Record (CDR) will not include information about the amount of data that is transmitted to/from the service provider's server 24, but this information will instead be in the service provider's Call Detail Record (CDR) and the cost for these services will be debited the service provider.

By means of the debiting mechanism according to the invention, a user consequently can utilize certain services free of charge and other services at reduced or full charge.

The for the user costless services can with advantage be supplemented with functionality at the user's which provides evidence to him/her that he/she is visiting a costless service. Preferably is for this purpose a dedicated application used at the user side, or an additional function in an existing application (for instance a plug in a browser) which receives information about which IP-addresses that are free of charge from one by the operator controlled master.

In a further development of the invention, it includes a debiting possibility which corresponds to the pay Gall of the circuit switched world. In this further development it is possible for the service provider to, according to his/her own choice, decide the cost of his/her services. This can be done in such a way that the traffic to/from the service provider's service server 24 is not zero-debited but by the price the service provider wants per data unit. This further development of the system includes devices to make the user aware of that he/she is going to load down data with a higher price.

In another embodiment of the system according to the invention devices are included for so called step debiting. By means of these devices all users are debited a fixed basic fee, and only when the user is exceeding a certain communicated amount of data per period he/she is debited an extra cost.

Further, the system according to the invention is suitable to create simple pay-services for downloading of electronic wares, for instance software. The system is also well suited for, for instance, banks, loan institutes, insurance companies, electronic commerce companies, travel agencies and other companies which want to make their customers to change to web-based customer services and ordering mechanisms.

The present invention has been described by means of exemplifying embodiments, but it should be realized that other embodiments are conceivable. The scope of the frame of the invention is only limited by the enclosed patent claims.

## Claims

1. A telecommunication and data communication system (10), including a base station BS (14), a service network node SGSN (16) connected to said base station BS (14), an internal network (18) connected via said service network node SGSN (16), an external network (22) connected by means of a network interconnection node GGSN (20) with said internal network (18), a service server (24) provided by a service provider connected to the external network (22), and providing information content to a user by means of a mobile station (12) and a debiting device, **characterized in that** the service network nodes SGSN (16) and the network interconnection nodes GGSN (20)are arranged to generate Call Detail Records CDR, and **in that** the debiting device is arranged to provide differentiated debiting, which debiting is dependent on the information content in the amount of data which is transmitted based on the Call Detail Records CDR, and on from/to which service server (24), identified by its IP-address, the amount of data is derived/transmitted.

2. System as claimed in patent claim 1, **characterized in that** said debiting device is arranged to, on basis of said service provider's specifications, debit a user.

3. System as claimed in patent claim 2, **characterized in that** said Call Detail Records CDR are arranged to include information about users, service provider and service server (24) and particularly information about the amount of data which is transmitted in uplink, respective downlink.

4. System as claimed in any of the patent claims 2 - 3, **characterized in that** the Call Detail Records CDR are arranged to separately account for amounts of data which have been transmitted to, respective from, the service servers (24) of different service providers, at which a division of costs is achieved.

5. System as claimed in patent claim 4, **characterized in that** an after-treatment device is arranged to perform said cost division, at which some costs associated to the user's Call Detail Record CDR are debited the user, and other costs are debited the service provider.

6. System as claimed in patent claim 4, **characterized in that** the service network nodes SGSN (16) and the network interconnection nodes GGSN (20) are arranged to perform said division of costs, at which the service provider is allocated an identity for which there is created a Call Detail Record CDR, which is arranged to include information about services which shall be debited the service provider, at which the user and the service provider are debited on basis of the information which are in their Call Detail Records CDR.

7. System as claimed in any of the previous patent claims, **characterized in that** the system (10) is arranged to provide information about the cost of/for a certain service to the user.

8. System as claimed in any of the previous patent claims, **characterized in that** the system (10) includes devices arranged to debit in steps, in dependence of the communicated amount of data per time period, based on the Call Detail Records CDR.

9. A procedure in a telecommunication and data communication system (10), including a base station BS (14), a service network node SGSN (16) connected to said base station BS (14), an internal network (18) connected via said service network node SGSN (16), an external network (22) connected by means of a network interconnection node GGSN (20) with said internal network (18), a service server (24) provided by a service provider connected to the external network (22) and providing information content to a user by means of a mobile station (12), and a debiting device, **characterized in that** the service network nodes SGSN (16) and the network interconnection nodes GGSN (20) generate Call Detail Records CDR, and **in that** the debiting device provides differentiated debiting, which debiting depends on the information content in the amount of data which is transmitted based on the Call Detail Records CDR, and on from/to which service server (24), identified by its IP-address, the amount of data is derived/transmitted.

10. Procedure as claimed in patent claim 9, **characterized in that** said debiting device debits a user on basis of the service provider's specifications.

11. Procedure as claimed in patent claim 10, **characterized in that** said Call Detail Records CDR include information abut users, service provider and service server (24), and particularly information about the amount of data which is transmitted in up, respective downlink.

12. Procedure as claimed in patent claim 11, **characterized in that** the Call Detail Records CDR separately account for amounts of data which have been transmitted to, respective from, the service servers (24) of different service providers, at which a cost division is achieved.

13. Procedure as claimed in patent claim 12, **characterized in that** an after-treatment device performs said cost division, at which some costs associated to the user's Call Detail Record CDR are debited the user, and other costs are debited the service provider.

14. Procedure as claimed in patent claim 12, **characterized in that** the service network nodes SGSN (16) and the network interconnection nodes GGSN (20) perform said cost division, at which the service provider is allocated an identity for which there is created a Call Detail Record CDR which includes information about services which shall be debited the service provider, at which the user and the service provider are debited on basis of the information that exist in the Call Detail Records CDR.

15. Procedure as claimed in any of the patent claims 9 - 14, **characterized in that** the system (10) provides information about the cost for/of a certain service to the user.

16. Procedure as claimed in any of the patent claims 9-15, **characterized in that** the system (10) provides devices which debits in steps, in dependence of the communicated amount of data per time period, based on the Call Detail Records CDR.

## Patentansprüche

1. Telekommunikations- und Datenkommunikationssystem (10), das eine Basisstation BS (14), einen Dienstnetzknoten SGSN (16), der mit der Basisstation BS (14) verbunden ist, ein internes Netz (18), das über den Dienstnetzknoten SGSN (16) verbunden ist, ein externes Netz (22), das mittels eines Netzverbindungsknotens GGSN (20) mit dem internen Netz (18) verbunden ist, einen Dienstserver (24), der durch einen Dienstanbieter zur Verfügung gestellt wird, mit dem externen Netz (22) verbunden ist und Informationsinhalt einem Benutzer mithilfe einer mobilen Station (12) zur Verfügung stellt, und eine Rechnungsstellungseinrichtung einschließt, **dadurch gekennzeichnet, dass** die Dienstnetzknoten SGSN (16) und die Netzverbindungsknoten GGSN (20) ausgebildet sind, Rufdetailaufzeichnungen CDR zu erzeugen, und dass die Rechnungsstellungseinrichtung dazu ausgebildet ist, differenzierte Rechnungsstellung zu liefern, welche Rechnungsstellung vom Informationsinhalt in der Datenmenge, die, beruhend auf dem Rufdetailaufzeichnungen CDR, übertragen wird, und davon abhängt, von/zu welchem Dienstserver (24), der durch seine IP-Adresse identifiziert wird, die Datenmenge hergeleitet/übertragen wird.

2. System nach Patentanspruch 1, **dadurch gekennzeichnet, dass** die Rechnungsstellungseinrichtung dazu ausgebildet ist, aufgrund der Spezifikationen des Dienstanbieters einem Benutzer Rechnung zu stellen.

3. System nach Patentanspruch 2, **dadurch gekennzeichnet, dass** die Rufdetailaufzeichnungen CDR dazu ausgebildet sind, Information über Benutzer, Dienstanbieter und Dienstserver (24) und insbesondere Information über die Datenmenge, die im Aufwärtsrichtung bzw. Abwärtsrichtung übertragen wird, einzuschließen.

4. System nach einem der Patentansprüche 2-3, **dadurch gekennzeichnet, dass** die Rufdetailaufzeichnungen CDR dazu ausgebildet sind, getrennt Datenmengen zu berücksichtigen, die zu bzw. von den Dienstservern (24) von unterschiedlichen Dienstanbietern übertragen worden sind, wodurch eine Kostenaufteilung erzielt wird.

5. System nach Patentanspruch 4, **dadurch gekennzeichnet, dass** eine Nachbehandlungseinrichtung angeordnet ist, um die Kostenaufteilung durchzuführen, wobei einige Kosten, die mit der Rufdetailaufzeichnung CDR des Benutzers verknüpft sind, dem Benutzer in Rechnung gestellt werden, und andere Kosten dem Dienstanbieter in Rechnung gestellt werden.

6. System nach Patentanspruch 4, **dadurch gekennzeichnet, dass** die Dienstnetzknoten SGSN (16) und die Netzverbindungsknoten GGSN (20) dazu ausgebildet sind, die Kostenaufteilung durchzuführen, wobei dem Dienstanbieter eine Identität zugeordnet wird, für die eine Rufdetailaufzeichnung CDR geschaffen wird, die dazu ausgebildet ist, Information über Dienste einzuschließen, die dem Dienstanbieter in Rechnung gestellt werden sollen, wobei dem Benutzer und dem Dienstanbieter Rechnung aufgrund der Information gestellt wird, die in ihren Rufdetailaufzeichnungen CWR sind.

7. System nach einem der vorangehenden Patentansprüche, **dadurch gekennzeichnet, dass** das System (10) dazu ausgebildet ist, dem Benutzer Information über die Kosten eines gewissen Dienstes oder für einen gewissen Dienst zu liefern.

8. System nach einem der vorangehenden Patentansprüche, **dadurch gekennzeichnet, dass** das System (10) Einrichtungen einschließt, die dazu ausgebildet sind, schrittweise in Abhängigkeit von der kommunizierten Datenmenge pro Zeitperiode, beruhend auf den Rufdetailaufzeichnungen CDR, Rechnung zu stellen.

9. Verfahren in einem Telekommunikations- und Datenkommunikationssystem (10), das eine Basisstation BS (14), einen Dienstnetzknoten SGSN (16), der mit der Basisstation BS (14) verbunden ist, ein internes Netz (18), das über den Dienstnetzknoten SGSN (16) verbunden ist, ein externes Netz (22), das mithilfe eines Netzverbindungsknotens GGSN (20) mit dem internen Netz (18) verbunden ist, einen Dienstserver (24), der durch einen Dienstanbieter zur Verfügung gestellt wird, mit dem externen Netz (22) verbunden ist und Informationsinhalt einem Benutzer mithilfe einer mobilen Station (12) liefert, und eine Rechnungsstellungseinrichtung einschließt, **dadurch gekennzeichnet, dass** die Dienstnetzknoten SGSN (16) und die Netzverbindungsknoten GGSN (20) Rufdetailaufzeichnungen CDR erzeugen, und dass die Rechnungsstellungseinrichtung differenzierte Rechnungsstellung liefert, welche Rechnungsstellung vom Informationsgehalt in der Datenmenge, die aufgrund der Rufdetailaufzeichnungen CDR übertragen wird, und davon abhängt, von/zu welchem Dienstserver (24), identifiziert durch seine IP-Adresse, die Datenmenge hergeleitet/übertragen wird.

10. Verfahren nach Patentanspruch 9, **dadurch gekennzeichnet, dass** die Rechnungsstellungseinrichtung einem Benutzer aufgrund der Spezifikationen des Dienstanbieters Rechnung stellt.

11. Verfahren nach Patentanspruch 10, **dadurch gekennzeichnet, dass** die Rufdetailaufzeichnungen CDR Information über Benutzer, Dienstanbieter und Dienstserver (24) und insbesondere Information über die Datenmenge einschließen, die in Aufwärtsrichtung bzw. Abwärtsrichtung übertragen werden.

12. Verfahren nach Patentanspruch 11, **dadurch gekennzeichnet, dass** die Rufdetailaufzeichnungen CDR getrennt Datenmengen berücksichtigen, die zu bzw. von den Dienstservern (24) unterschiedlicher Dienstanbieter übertragen worden sind, wodurch eine Kostenaufteilung erzielt wird.

13. Verfahren nach Patentanspruch 12, **dadurch gekennzeichnet, dass** eine Nachbehandlungseinrichtung die Kostenaufteilung durchführt, wobei einige Kosten, die mit der Rufdetailaufzeichnung CDR des Benutzers verknüpft sind, dem Benutzer in Rechnung gestellt werden, und andere Kosten dem Dienstanbieter in Rechnung gestellt werden.

14. Verfahren nach Patentanspruch 12, **dadurch gekennzeichnet, dass** die Dienstnetzknoten SGSN (16) und die Netzverbindungsknoten GGSN (20) die Kostenaufteilung durchführen, wobei dem Dienstanbieter eine Identität zugeordnet wird, für die eine Rufdetailaufzeichnung CDR geschaffen wird, die Information über Dienste einschließt, die dem Dienstanbieter in Rechnung gestellt werden sollen, wobei dem Benutzer und dem Dienstanbieter Rechnung aufgrund der Information gestellt wird, die in den Rufdetailaufzeichnungen CDR existiert.

15. Verfahren nach einem der Patentansprüche 9-14, **dadurch gekennzeichnet, dass** das System (10) dem Benutzer Information über die Kosten für einen gewissen Dienst oder eines gewissen Dienstes liefert.

16. Verfahren nach einem der Patentansprüche 9-15, **dadurch gekennzeichnet, dass** das System (10) Einrichtungen zur Verfügung stellt, die schrittweise in Abhängigkeit von der kommunizierten Datenmenge pro Zeitperiode beruhend auf den Rufdetailaufzeichnungen CDR Rechnung stellen.

## Revendications

1. Système de télécommunication et de communication de données (10), comportant une station de base BS (14), un noeud de réseau de service SGSN (16) raccordé à ladite station de base BS (14), un réseau interne (18) raccordé par l'intermédiaire dudit noeud de réseau de service SGSN (16), un réseau externe (22) raccordé au moyen d'un noeud d'interconnexion de réseau GGSN (20) audit réseau interne (18), un serveur de service (24) proposé par un fournisseur de service raccordé au réseau externe (22) et proposant un contenu en informations à un utilisateur au moyen d'une station mobile (12) et un dispositif de facturation, **caractérisé en ce que** les noeuds de réseau de service SGSN (16) et les noeuds d'interconnexion de réseau GGSN (20) sont agencés de manière à produire des enregistrements de détail d'appel CDR, et **en ce que** le dispositif de facturation est agencé de manière à assurer une facturation différenciée, laquelle facturation dépend du contenu en informations dans le volume de données qui est transmis sur la base des enregistrements de détail d'appel CDR, et du serveur de service (24) identifié par son adresse IP, à partir duquel provient le volume de données ou vers lequel il est transmis.

2. Système selon la revendication 1, **caractérisé en ce que** ledit dispositif de facturation est agencé, sur la base de spécifications dudit fournisseur de service, de manière à facturer un utilisateur.

3. Système selon la revendication 2, **caractérisé en ce que** lesdits enregistrements de détail d'appel sont agencés afin de comporter des informations concernant des utilisateurs, fournisseur de service et serveur de service (24) et, en particulier, des informations concernant le volume de données qui est transmis en liaison montante, respectivement en liaison descendante.

4. Système selon l'une quelconque des revendications 2 ou 3, **caractérisé en ce que** les enregistrements de détail d'appel CDR sont agencés afin de prendre en compte séparément des volumes de données qui ont été transmis aux serveurs de service (24) de différents fournisseurs de service, respectivement à partir de ces derniers, au niveau desquels une répartition des coûts est assurée.

5. Système selon la revendication 4, **caractérisé en ce qu'**un dispositif de traitement postérieur est agencé afin d'exécuter ladite répartition de coût, pour laquelle certains coûts associés à l'enregistrement de détail d'appel CDR de l'utilisateur sont facturés à l'utilisateur, et d'autres coûts sont facturés au fournisseur de service.

6. Système selon la revendication 4, **caractérisé en ce que** les noeuds de réseau de service SGSN (16) et les noeuds d'interconnexion de réseau GGSN (20) sont agencés de manière à exécuter ladite répartition de coûts, pour laquelle le fournisseur de service est affecté d'une identité pour laquelle il est créé un enregistrement de détail d'appel CDR, qui est agencé afin de comporter des informations concernant des services qui doivent être facturés au fournisseur de service, pour laquelle l'utilisateur et le fournisseur de service sont facturés sur la base des informations qui sont dans leurs enregistrements de détail d'appel CDR.

7. Système selon l'une quelconque des revendications précédentes, **caractérisé en ce que** le système (10) est agencé de manière à fournir des informations concernant le coût d'un ou pour un certain service à l'utilisateur.

8. Système selon l'une quelconque des revendications précédentes, **caractérisé en ce que** le système (10) comporte des dispositifs agencés de manière à facturer par paliers, en fonction du volume de données communiqué par période de temps, sur la base des enregistrements de détail d'appel CDR.

9. Procédure dans un système de télécommunication et de communication de données (10), comportant une station de base BS (14), un noeud de réseau de service SGSN (16) raccordé à ladite station de base BS (14), un réseau interne (18) raccordé par l'intermédiaire dudit noeud de réseau de service SGSN (16), un réseau externe (22) raccordé au moyen d'un noeud d'interconnexion de réseau GGSN (20) audit réseau interne (18), un serveur de service (24) proposé par un fournisseur de service raccordé au réseau externe (22) et proposant un contenu en informations à un utilisateur au moyen d'une station mobile (12), et un dispositif de facturation, **caractérisée en ce que** les noeuds de réseau de service SGSN (16) et les noeuds d'interconnexion de réseau GGSN (20) produisent des enregistrements de détail d'appel CDR, et **en ce que** le dispositif de facturation assure une facturation différenciée, laquelle facturation dépend du contenu en informations dans le volume de données qui est transmis sur la base des enregistrements de détail d'appel CDR, et du serveur de service (24), identifié par son adresse IP, à partir duquel provient le volume de données ou vers lequel il est transmis.

10. Procédure selon la revendication 9, **caractérisée en ce que** ledit dispositif de facturation facture un utilisateur sur la base des spécifications du fournisseur de service.

11. Procédure selon la revendication 10, **caractérisée en ce que** lesdits enregistrements de détail d'appel CDR comportent des informations concernant des utilisateurs, fournisseur de service et serveur de service (24), et en particulier des informations concernant le volume de données qui est transmis en liaison montante, respectivement descendante.

12. Procédure selon la revendication 11, **caractérisée en ce que** les enregistrements de détail d'appel CDR prennent séparément en compte des volumes de données qui ont été transmis vers les serveurs de service (24) de différents fournisseurs de service, respectivement à partir de ces derniers, au niveau desquels une répartition de coût est assurée.

13. Procédure selon la revendication 12, **caractérisée en ce qu'**un dispositif de traitement postérieur exécute ladite répartition de coût, pour laquelle certains coûts associés à l'enregistrement de détail d'appel CDR de l'utilisateur sont facturés à l'utilisateur et d'autres coûts sont facturés au fournisseur de service.

14. Procédure selon la revendication 12, **caractérisée en ce que** les noeuds de réseau de service SGSN (16) et les noeuds d'interconnexion de réseau GGSN (20) exécutent ladite répartition de coût, pour laquelle le fournisseur de service est affecté d'une identité pour laquelle il est crée un enregistrement de détail d'appel CDR qui comporte des informations concernant les services qui doivent être facturés au fournisseur de service, pour laquelle l'utilisateur et le fournisseur de service sont facturés sur la base des informations qui existent dans les enregistrements de détail d'appel CDR.

15. Procédure selon l'une quelconque des revendications 9 à 14, **caractérisée en ce que** le système (10) fournit des informations concernant le coût pour ou d'un certain service à l'utilisateur.

16. Procédure selon l'une quelconque des revendications 9 à 15, **caractérisée en ce que** le système (10) comprend des dispositifs qui facturent par paliers, en fonction du volume de données communiqué par période de temps, sur la base des enregistrements de détail d'appel CDR.
